# EUROPÄISCHE PATENTSCHRIFT

(11) **EP 4 098 882 B1**
(45) Veröffentlichungstag und Bekanntmachung des Hinweises auf die Patenterteilung: **09.09.2026**
(21) Anmeldenummer: 21177368.4
(22) Anmeldetag: 02.06.2021
(51) Int. Cl.: F04D 29/02, F04D 29/28, F04D 29/66, H02K 1/2786, H02K 9/06

(54) **GEBLÄSERAD UND VERFAHREN ZUR HERSTELLUNG EINES GEBLÄSERADS**
BLOWER WHEEL AND METHOD FOR PRODUCING SAME
ROUE DE VENTILATEUR ET PROCÉDÉ DE FABRICATION D'UNE ROUE DE VENTILATEUR

(43) Veröffentlichungstag der Anmeldung: 07.12.2022
(73) Patentinhaber: Andreas Stihl AG & Co. KG, 71336 Waiblingen (DE)
(72) Erfinder: PAWLOWSKI, Jan, 71642 Poppenweiler (DE); BARTH, Benjamin, 74538 Rosengarten (DE)
(74) Vertreter: Karzel, Philipp

(56) Entgegenhaltungen:
- EP-A1- 3 181 910
- DE-A1- 102004 036 548
- DE-A1- 3 546 029
- JP-A- 2019 124 129
- US-A- 3 828 212
- US-B1- 6 242 828

## Beschreibung

Die Erfindung betrifft ein Gebläserad nach dem Oberbegriff des Anspruchs 1.

Gebläseräder werden beispielsweise bei Verbrennungsmotoren zur Förderung der Kühlluft eingesetzt. Hierzu wird ein Gebläserad drehfest an der Kurbelwelle des Verbrennungsmotors festgelegt. Ein solches Gebläserad dient üblicherweise gleichzeitig als Schwungrad für den Verbrennungsmotor. Gebläseräder werden auch zur Förderung von Kühlluft in mit einem Elektromotor angetriebenen Arbeitsgeräten eingesetzt.

Aus der CN 201065911 Y ist ein Gebläserad bekannt, in dessen Grundkörper ein Ausgleichsgewicht aus Eisen zur Auswuchtung des Gebläserads eingegossen ist. Ein solches Gebläserad besitzt eine geringe Stabilität.

Die DE 10 2004 036 548 A1 betrifft ein Polrad für einen Verbrennungsmotor, das schichtweise aus mehreren verschiedenen Blechen aufgebaut ist. Den Kern des Polrads bilden die Speichenradbleche. Im radial äußeren Bereich sind in Axialrichtung Ringbleche auf die Speichenradbleche geschichtet. Das Polrad ist in einem Ausführungsbeispiel mit einem Formmaterial überzogen, aus dem Lüfterradflügel geformt sind. Das Ringblech ist in das Formmaterial eingebettet, das aus Kunststoff, Aluminium oder Magnesium sein kann.

Die US 6,242,828 B1 offenbart ein Gebläserad mit teilweise in Aluminium eingegossenen Blechteilen. Die radial außenliegende Seite des Pakets aus Blechteilen ist nicht eingegossen.

Die JP 2019-124129 A offenbart ein Gebläserad mit einem um die Drehachse C umlaufenden, rotationssymmetrischen Kern aus faserverstärktem Kunstharz, der in einen Grundkörper aus unverstärktem Kunstharz eingegossen ist.

Die US 3,828,212 A offenbart ein Gebläserad mit einem Rotor und einem Magnethalter, in dem Magnete gehalten sind. Der Magnethalter ist mittels Kunstharz an die innere Außenseite des Rotors geklebt. Der Magnethalter ist bevorzugt aus Zink, damit der Wärmeausdehnungskoeffizient nicht zu verschieden von dem des Eisens des Rotors ist.

DE 35 46 029 A1 offenbart ein Lüfterrad mit Unwuchtgewicht.

Der Erfindung liegt die Aufgabe zugrunde, ein Gebläserad der gattungsgemäßen Art derart weiterzubilden, dass das Gebläserad einfach zu fertigen ist und eine hohe Stabilität aufweist.

Diese Aufgabe wird durch ein Gebläserad mit den Merkmalen des Anspruchs 1 gelöst. Die geringe Stabilität des Gebläserads im Betrieb ist in erster Linie dadurch bedingt, dass das Schwungteil aufgrund der Rotation des Gebläserads eine Zentrifugalkraft auf den Grundkörper des Gebläserads ausübt und dadurch der Grundkörper des Gebläserads einer großen lokalen Belastung ausgesetzt ist. Diesem Effekt kann insbesondere dadurch entgegengewirkt werden, dass das Schwungteil im Wesentlichen ringförmig ist und geschlossen um die Drehachse umläuft. Bei einem geschlossenen ringförmigen Schwungteil sind alle Massepunkte, auf die die Zentrifugalkraft wirkt, miteinander verbunden. Dadurch ist eine Struktursteifigkeit des Schwungteils gegeben, die einer Relativbewegung der Massepunkte zueinander entgegenwirkt. Eine Relativbewegung der Massepunkte zueinander ist praktisch unterbunden. Die Zentrifugalkraft, die durch das Schwungteil auf den Grundkörper ausgeübt wird, ist fast vollständig aufgehoben. Wäre das Schwungteil nicht geschlossen, sondern z.B. geschlitzt so fiele die tragende Funktion genau an der Stelle des Schlitzes weg. Dann würde der Relativbewegung nur noch die Formstabilität entgegenwirken, die mit einem immer größer werdenden Schlitz abnähme. Dies wäre mit einer größeren Belastung auf den Grundkörper verbunden. Die Zentrifugalkraft, die bei dem erfindungsgemäßen Gebläserad durch das Schwungteil auf den Grundkörper ausgeübt wird, bewirkt auch langfristig keine Schwächung der Stabilität des Grundkörpers des Gebläserads.

Der Erfindung liegt die Erkenntnis zugrunde, dass eine geringe Stabilität des Grundkörpers insbesondere im Betrieb durch eine verschiedene Ausdehnung des Grundkörpers und des Schwungteils in Abhängigkeit der Temperatur begründet ist. Das Gebläserad fördert im Betrieb Kühlluft zur Kühlung des Verbrennungsmotors. Es kann auch vorgesehen sein, dass das Gebläserad Kühlluft zur Kühlung eines Elektromotors fördert. Dadurch ist es i.d.R. so angeordnet, dass zum einen Wärme vom Verbrennungsmotor auf das Gebläserad übertragen wird, und dass zum anderen das Gebläserad durch die Förderung der Kühlluft selbst abkühlt. Dadurch kommt es im Betrieb zu großen Temperaturschwankungen. Derartige Temperaturschwankungen können insbesondere auch bei sehr niedrigen Außentemperaturen, beispielsweise von -20°C zustande kommen, wenn der Motor im Betrieb heiß läuft, beim Nachheizen und beim Stillstand nach Beendigung des Betriebs, insbesondere wenn dann die Bauteile um das Kerntriebwerk herum nachgeheizt werden. Während solcher Temperaturschwankungen dehnen sich sowohl das Schwungteil als auch der Grundkörper des Gebläserads aus oder ziehen sich zusammen. Wenn sich das vom Grundkörper zumindest teilweise umschlossene Schwungteil nun stärker ausdehnt als der Grundkörper und insbesondere als die im Grundkörper für das Schwungteil gebildete Aufnahme, kann es insbesondere im Betrieb des Gebläserads zu erhöhten Spannungen kommen, die die Stabilität des Gebläserads beeinträchtigen. Dies wird beim erfindungsgemäßen Gebläserad dadurch verhindert, dass das erste Material des Grundkörpers einen ersten Wärmeausdehnungskoeffizienten aufweist, dass das zweite Material des Schwungteils einen zweiten Wärmeausdehnungskoeffizienten aufweist, und dass der zweite Wärmeausdehnungskoeffizient 70% bis 110%, insbesondere 80% bis 100%, bevorzugt 85% bis 95% des ersten Wärmeausdehnungskoeffizienten beträgt. Dadurch sind sich die Wärmeausdehnungskoeffizienten des ersten Materials und des zweiten Materials so ähnlich, dass die Ausdehnung beider Materialien in Abhängigkeit der Temperatur in vergleichbarer Weise erfolgt und dass das Gebläserad insbesondere auch während des Betriebs eine hohe Stabilität aufweist. Trotz der verschiedenen Dichten des ersten Materials des Grundkörpers und des zweiten Materials des Schwungteils besitzt das Gebläserad insgesamt eine hohe Stabilität. Insbesondere die Integrität des Grundkörpers ist dadurch sichergestellt.

Eine besonders hohe Stabilität des Gebläserads ergibt sich, wenn der zweite Wärmeausdehnungskoeffizient 70% bis 110%, insbesondere 80% bis 100%, bevorzugt 85% bis 95% des ersten Wärmeausdehnungskoeffizienten beträgt und das Schwungteil im Wesentlichen ringförmig ist und geschlossen um die Drehachse umläuft.

Das Gebläserad kann gemäß Varianten gestaltet sein. Die Varianten umfassen eine erste, erfindungsgemäße Variante und eine zweite, nicht erfindungsgemäße Variante. Vorteile sind gegeben, wenn die Gestaltung des Gebläserads ausgewählt ist aus den Varianten, wobei nach der ersten Variante der zweite Wärmeausdehnungskoeffizient 70% bis 110%, insbesondere 80% bis 100%, bevorzugt 85% bis 95% des ersten Wärmeausdehnungskoeffizienten beträgt, und wobei nach der zweiten Variante das Schwungteil im Wesentlichen ringförmig ist und geschlossen um die Drehachse umläuft.

Der Wärmeausdehnungskoeffizient wird auch als Längenausdehnungskoeffizient bezeichnet. Der Längenausdehnungskoeffizient eines Festkörpers mit der Länge ist die Proportionalitätskonstante zwischen der Temperaturänderung und der relativen Längenänderung dL/L.

Zweckmäßig liegt das Schwungteil an dem Grundkörper an. Vorteilhaft kontaktiert das Schwungteil den Grundkörper unmittelbar. Erfindungsgemäß ist das Schwungteil in das erste Material des Grundkörpers eingegossen. Dadurch ist das Gebläserad auf einfache Weise herstellbar.

Insbesondere liegt das Schwungteil geschützt im Inneren des Grundkörpers. Das Strömungsverhalten des Gebläserads ist durch das Schwungteil weitgehend unbeeinflusst. Zweckmäßig steht das Schwungteil nicht über den Grundkörper vor. Vorteilhaft ist das Schwungteil vollständig von dem Grundkörper umschlossen.

In vorteilhafter Weiterbildung der Erfindung weist das Gebläserad aufgrund des Schwungteils eine Unwucht bezüglich der Drehachse auf. Dadurch kann das Schwungteil zu einem gleichmäßigen Laufverhalten eines Verbrennungsmotors beitragen. Das Schwungteil kann so als Gegengewicht zur Bewegung des Kolbens des Verbrennungsmotors eingesetzt werden. Auf diese Weise können Schwingungen, die ansonsten vom Verbrennungsmotor auf andere Bauteile eines den Verbrennungsmotor und das Gebläserad umfassenden Arbeitsgeräts übertragen werden, reduziert werden.

In der zweiten, nicht erfindungsgemäßen Variante weist das Schwungteil bezüglich der Drehachse eine Unwucht auf. Dadurch kann das Schwungteil trotz seiner im Wesentlichen ringförmigen Form als Unwuchtteil genutzt werden. Es kann auch vorgesehen sein, dass das Schwungteil in der ersten, erfindungsgemäßen Variante bezüglich der Drehachse eine Unwucht aufweist.

Insbesondere ist die Unwucht des Schwungteils durch eine Ausnehmung im ansonsten im Wesentlichen kreisringförmigen Schwungteil gebildet. Dadurch kann die Unwucht des Schwungteils auf einfache Weise hergestellt sein.

Insbesondere ist das Schwungteil bezüglich einer senkrecht zur Drehachse verlaufenden Symmetrieebene symmetrisch. Hierdurch ergibt sich während des Herstellens des Gebläserads in einem Gussverfahren ein gutes Fließverhalten des vergossenen Materials.

Erfindungsgemäß ist die Dichte des zweiten Materials größer als die Dichte des ersten Materials. Dadurch kann das Schwungteil als Trägheitsring genutzt werden. Das Schwungteil erhöht das Trägheitsmoment des Gebläserads. Der Grundkörper des Gebläserads kann aus einem Material mit vergleichsweise geringer Dichte bestehen. Dadurch wird ein geringes Gesamtgewicht des Gebläserads erreicht. Um dennoch ein gleichmäßiges Laufverhalten eines Verbrennungsmotors, an dem das Gebläserad montiert sein kann, zu erreichen, ist das Schwungteil aus einem Material mit größerer Dichte vorgesehen. Dadurch ergibt sich ein gleichmäßiges Laufverhalten des Gebläserads. Weiterhin besitzt das Gebläserad bei einer Rotation eine größere Rotationsenergie. Dadurch ist die Verwendung des Gebläserads als Schwungrad begünstigt. Aufgrund der größeren Dichte des zweiten Materials des Schwungteils kann das Schwungteil bei kleinem Volumen eine große Masse besitzen, dadurch ist eine Einsparung von Bauraum möglich. Dadurch kann das Trägheitsmoment des Gebläserads durch das Schwungteil unter Verwendung eines lediglich kleinen Bauraums vergrößert werden. Insbesondere beträgt die Dichte des zweiten Materials mehr als das 2fache der Dichte des ersten Materials.

Der Grundkörper weist eine erste Außenfläche und eine zweite Außenfläche auf. Die erste Außenfläche und die zweite Außenfläche weisen bezüglich der Drehachse in entgegengesetzte Richtungen. Vorteilhaft sind auf dem Grundkörper auf der ersten Außenfläche erste Lüfterradschaufeln angeordnet. Vorteilhaft sind auf dem Grundkörper auf der zweiten Außenfläche zweite Lüfterradschaufeln angeordnet. Dadurch können beide Außenflächen des Gebläserads zur Förderung von Kühlluft genutzt werden. Die erste Außenfläche und die zweite Außenfläche des Gebläserads können Bestandteil unterschiedlicher Kühlluftkreisläufe sein.

Insbesondere begrenzen benachbarte erste Lüfterradschaufeln, die auf der ersten Außenfläche des Grundkörpers angeordnet sind, eine erste Luftleitfläche. Die erste Luftleitfläche verläuft zwischen den benachbarten ersten Lüfterradschaufeln und ist durch einen Teil der Außenfläche des Grundkörpers gebildet. Die erste Luftleitfläche dient zur Führung der vom Gebläserad geförderten Kühlluft. Zweckmäßig begrenzen benachbarte zweite Lüfterradschaufeln, die auf der zweiten Außenfläche angeordnet sind, auf der zweiten Außenfläche eine zweite Luftleitfläche. Die zweite Luftleitfläche verläuft zwischen den benachbarten zweiten Lüfterradschaufeln und ist durch einen Teil der Außenfläche des Grundkörpers gebildet. Die zweite Luftleitfläche dient zur Führung der vom Gebläserad geförderten Kühlluft.

Die ersten Lüfterradschaufeln besitzen eine erste Gesamtmasse. Die zweiten Lüfterradschaufeln besitzen eine zweite Gesamtmasse. Insbesondere besitzen die ersten Lüfterradschaufeln eine ausgehend von der ersten Außenfläche gemessene erste maximale Höhe. Die zweiten Lüfterradschaufeln besitzen eine in entgegengesetzte Richtung von der zweiten Außenfläche gemessene zweite maximale Höhe. Vorteilhaft ist die erste maximale Höhe größer als die zweite maximale Höhe.

Insbesondere ist das Gebläserad als Radialgebläse ausgebildet.

Das Schwungteil weist einen Massenschwerpunkt auf. Vorteilhaft liegt der Massenschwerpunkt bezüglich der Richtung der Drehachse in der Mitte zwischen der ersten Außenfläche und der zweiten Außenfläche des Schwungteils.

Das Schwungteil weist eine erste Seitenfläche auf, die der ersten Außenfläche des Grundkörpers zugewandt ist. Das Schwungteil weist eine zweite Seitenfläche auf, die der zweiten Außenfläche des Grundkörpers zugewandt ist. In vorteilhafter Weiterbildung der Erfindung folgt eine Kontur der ersten Seitenfläche des Schwungteils einer Kontur der ersten Außenfläche des Grundkörpers. Zweckmäßig folgt eine Kontur der zweiten Seitenfläche des Schwungteils einer Kontur der zweiten Außenfläche des Grundkörpers. Dadurch kann der Bauraum für das Schwungteil optimal ausgenutzt werden und gleichzeitig durch die Konturen der ersten Außenfläche und der zweiten Außenfläche des Grundkörpers eine effiziente Luftströmung gestaltet werden. Die erste Seitenfläche des Schwungteils weist zu der ersten Außenfläche des Grundkörpers einen in Richtung der Drehachse gemessenen ersten Abstand auf. Insbesondere ist der erste Abstand konstant. Die zweite Seitenfläche des Schwungteils weist zu der zweiten Außenfläche des Grundkörpers einen in Richtung der Drehachse gemessenen zweiten Abstand auf. Insbesondere ist der zweite Abstand konstant.

In vorteilhafter Weiterbildung der Erfindung nimmt ein zwischen der ersten Außenfläche und der zweiten Außenfläche des Grundkörpers in Richtung der Drehachse gemessener Außenabstand mit zunehmendem Radialabstand zur Drehachse ab. Dadurch ist eine vorteilhafte Führung der Strömungsluft möglich. Vorteilhaft verläuft die erste Luftleitfläche auf der ersten Außenfläche bezüglich der Drehachse geneigt. Insbesondere verläuft die zweite Luftleitfläche auf der zweiten Außenfläche bezüglich der Drehachse geneigt.

In besonders vorteilhafter Ausgestaltung der Erfindung ist vorgesehen, dass der Wärmeausdehnungskoeffizient des ersten Materials von 21·10⁻⁶ K⁻¹ bis 23 ·10⁻⁶ K⁻¹ beträgt. Ebenfalls ganz besonders vorteilhaft beträgt der Wärmeausdehnungskoeffizient des zweiten Materials von 17·10⁻⁶ K⁻¹ bis 21·10⁻⁶ K⁻¹.

Insbesondere ist das erste Material eine Leichtmetalllegierung. Zweckmäßig ist das zweite Material eine Schwermetalllegierung. Vorteilhaft ist das erste Material eine Aluminiumlegierung. Insbesondere ist das zweite Material eine Messinglegierung. Es kann alternativ auch vorgesehen sein, dass das erste Material eine Magnesiumlegierung ist.

Es kann vorgesehen sein, dass das Gebläserad Teil eines handgeführten, tragbaren Arbeitsgeräts mit einem Ausleger und einem Motor ist. Insbesondere ist der Motor ein Verbrennungsmotor. Es kann aber auch vorgesehen sein, dass der Motor ein Elektromotor ist. Durch die vorangehend beschriebenen Ausgestaltungen des Gebläserads kann die Übertragung von Vibrationen auf den Ausleger reduziert werden.

Insbesondere kann die Unwucht des Gebläserads bei einem Arbeitsgerät mit einem Verbrennungsmotor als Gegengewicht für die Kolbenbewegung genutzt werden. Durch gezielte Positionierung der Unwucht können vom Verbrennungsmotor bewirkte Schwingungen des Auslegers reduziert oder zu einem großen Anteil unterdrückt werden.

Gemäß eines nicht beanspruchten Verfahrens kann insbesondere vorgesehen sein, dass das Schwungteil in einem Gussverfahrensschritt in das erste Material des Grundkörpers eingegossen wird und dass die Position des Ausrichtungselements im selben Gussverfahrensschritt festgelegt wird, in dem das Schwungteil in den Grundkörper eingegossen wird, so dass eine exakte Positionierung der Unwucht des Gebläserads relativ zu dem Ausrichtungselement erreicht wird. Dadurch kann eine effiziente Herstellung des Gebläserads mit geringer Toleranz für die Relativposition von Unwucht des Schwungteils und des Ausrichtelements des Grundkörpers erreicht werden. Diesem nicht erfindungsgemäßen Verfahren liegt die Erkenntnis zugrunde, dass eine ungenaue Relativpositionierung von der Unwucht des Gebläserads und einer Unwucht eines Verbrennungsmotors zu ungünstigen Unwuchtverhältnissen des Gesamtsystems führen kann. Dies kann wiederum zu einem größeren Maß an Schwingungen und Spannungen in den Bauteilen führen. Durch die vermehrt auftretenden Spannungen und Schwingungen kann die Stabilität des Gebläserads, insbesondere des Grundkörpers des Gebläserads im Betrieb des Gebläserads beeinträchtigt sein. Durch die exakte Positionierung der Unwucht des Gebläserads relativ zu dem Ausrichtungselement zur Ausrichtung des Gebläserads in Relation zu einer Kurbelwelle eines Verbrennungsmotors kann eine Schwingungsreduzierung des Gesamtsystems erreicht werden, die im Betrieb des mit dem erfindungsgemäßen Verfahren hergestellten Gebläserads die Integrität des Gebläserads sicherstellt.

Ein Ausführungsbeispiel der Erfindung ist nachstehend anhand der Zeichnung näher erläutert. Es zeigen:
- Fig. 1 und 2: schematische Seitenansichten auf ein handgeführtes Arbeitsgerät mit einem Gebläserad,
- Fig. 3: eine perspektivische Darstellung des Gebläserads des handgeführten Arbeitsgeräts aus den Fig. 1 und 2,
- Fig. 4: eine Explosionsdarstellung des Gebläserads aus Fig. 3,
- Fig. 5: eine teilgeschnittene Darstellung einer Seitenansicht auf das Gebläserad aus den Fig. 3 und 4,
- Fig. 6: eine perspektivische, teilgeschnittene Darstellung des Gebläserads aus den Fig. 3 bis 5,
- Fig. 7: eine perspektivische Darstellung eines Schwungteils des Gebläserads aus den Fig. 3 bis 6,
- Fig. 8: eine Seitenansicht auf das Gebläserad aus den Fig. 3 bis 6,
- Fig. 9: eine teilgeschnittene Darstellung des Gebläserads aus Fig. 8,
- Fig. 10: eine Schnittdarstellung entlang der Schnittebene X-X in Fig. 8,
- Fig. 11: eine Schnittdarstellung eines Schnitts entlang der Schnittebene XI-XI in Fig. 9,
- Fig. 12: eine Schnittdarstellung entlang der Schnittebene XII-XII in Fig. 9,
- Fig. 13: eine Schnittdarstellung entlang der Schnittebene XII in Fig. 9,
- Fig. 14: eine Detaildarstellung des in Fig. 8 mit XIV gekennzeichneten Details und
- Fig. 15: eine Detaildarstellung des in Fig. 10 mit XV gekennzeichneten Details.

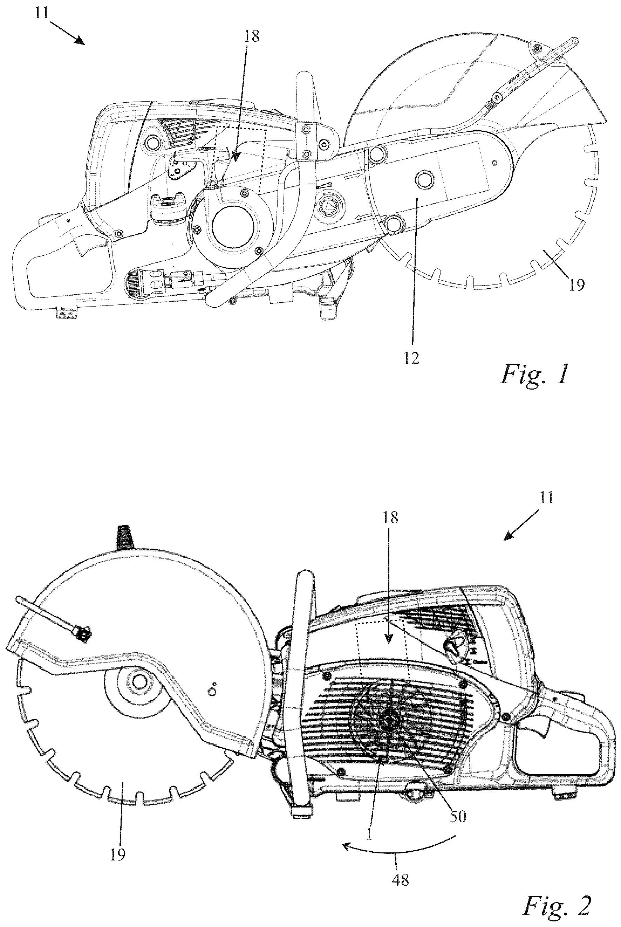

Fig. 1 zeigt ein handgeführtes Arbeitsgerät 11. Bei dem handgeführten Arbeitsgerät 11 handelt es sich um einen Trennschleifer. Das handgeführte Arbeitsgerät kann aber auch beispielsweise eine Motorkettensäge, ein Freischneider, ein Blasgerät oder ein ähnliches Arbeitsgerät sein.

Das handgeführte Arbeitsgerät 11 besitzt einen Verbrennungsmotor 18 (in den Fig. 1 und 2 gestrichelt dargestellt). Anstatt des Verbrennungsmotors kann auch ein Elektromotor vorgesehen sein. Der Verbrennungsmotor 18 treibt ein Werkzeug 19 an.

Im Ausführungsbeispiel ist das Werkzeug eine Trennscheibe. Wie in den Fig. 1 und 2 dargestellt, ist die Trennscheibe drehbar an einem Ausleger 12 des handgeführten Arbeitsgeräts 11 gelagert. Auf der nicht dargestellten Kurbelwelle des Verbrennungsmotors 18 ist ein Gebläserad 1 angeordnet (Fig. 2). Das Gebläserad 1 ist um die Drehachse 50 drehbar. Das Gebläserad 1 ist drehfest mit der Kurbelwelle des Verbrennungsmotors 18 verbunden. Das Gebläserad 1 besitzt eine Umfangsrichtung 48. Die Umfangsrichtung 48 läuft um die Drehachse 50 um. Die Umfangsrichtung 48 zeigt in Fig. 2 entgegen der Drehrichtung des Gebläserads 1. Die Drehrichtung der Kurbelwelle des Verbrennungsmotors 18 entspricht der negativen Umfangsrichtung 48. Das Gebläserad 1 dient zur Förderung von Kühlluft. Gleichzeitig erfüllt das Gebläserad 1 die Funktion eines Schwungrads für den Verbrennungsmotor 18. Vorteilhaft weist das Gebläserad 1 eine Unwucht auf. Die Unwucht des Gebläserads 1 dient als Gegengewicht zu einer durch den Verbrennungsmotor 18 erzeugten Unwucht.

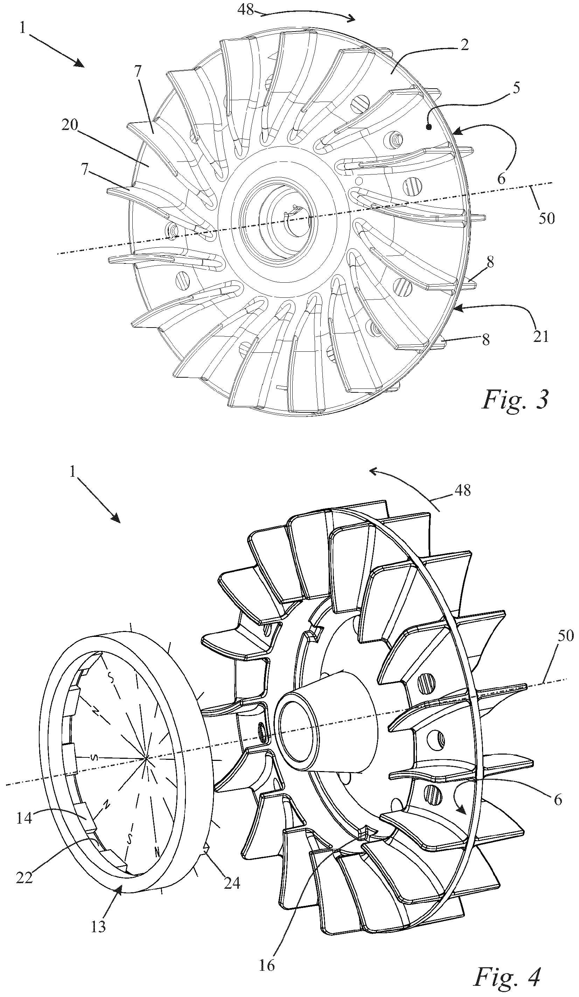

Fig. 3 zeigt das Gebläserad 1 in perspektivischer Darstellung. Das Gebläserad 1 weist einen Grundkörper 2 auf. Der Grundkörper 2 besitzt eine erste Außenfläche 5 und eine zweite Außenfläche 6. Die erste Außenfläche 5 und die zweite Außenfläche 6 weisen bezüglich der Drehachse 50 in entgegengesetzte Richtungen. Auf der ersten Außenfläche 5 sind erste Lüfterradschaufeln 7 angeordnet. Auf der zweiten Außenfläche 6 sind zweite Lüfterradschaufeln 8 angeordnet. Die ersten Lüfterradschaufeln 7 und die zweiten Lüfterradschaufeln 8 erstrecken sich von einem radial innen liegenden Bereich des Grundkörpers 2 hin zu einem radial außen liegenden Bereich des Grundkörpers 2. Um die Drehachse 50 herum verläuft die Umfangsrichtung 48. In Umfangsrichtung 48 benachbarte erste Lüfterradschaufeln 7 begrenzen auf der ersten Außenfläche 5 des Grundkörpers 2 eine erste Luftleitfläche 20. In Umfangsrichtung 48 benachbarte zweite Lüfterradschaufeln 8 begrenzen auf der zweiten Außenfläche 6 des Grundkörpers 2 eine zweite Luftleitfläche 21. Das Gebläserad 1 ist vorteilhaft ein Radialgebläse. Insbesondere ist das Gebläserad 1 beidseitig beschaufelt.

Alternativ kann das Gebläserad auch nur einseitig beschaufelt sein. Anders ausgedrückt kann alternativ vorgesehen sein, dass nur auf einer einzigen der beiden Außenflächen 5 und 6 des Grundkörpers 2 Lüfterradschaufeln angeordnet sind.

Die zweiten Lüfterradschaufeln 8 auf der zweiten Außenfläche 6 des Grundkörpers 2 werden zur Förderung von Kühlluft zur Kühlung des Verbrennungsmotors 18 genutzt. Die ersten Lüfterradschaufeln 7 auf der ersten Außenfläche 5 des Grundkörpers 2 werden im Ausführungsbeispiel dazu genutzt, die angesaugte Luft in einem nicht dargestellten Kanal in Rotation zu versetzen. Dadurch werden größere und schwerere von der angesaugten Luft mitgeführte Partikel radial nach außen weg geschleudert. So kann die angesaugte Luft vorgereinigt werden und erst dann Luftfiltern und dem Ansaugkanal des Verbrennungsmotors 18 zugeführt werden. Dadurch haben die Luftfilter für die dem Ansaugkanal des Verbrennungsmotors 18 zugeführte Verbrennungsluft eine größere Standzeit, und die Lebensdauer des Verbrennungsmotors 18 ist erhöht.

Wie in Fig. 4 dargestellt, umfasst das Gebläserad 1 vorteilhaft einen Magnethalter 13. Der Magnethalter 13 ist auf der zweiten Außenfläche 6 des Grundkörpers 2 angeordnet. Der Magnethalter 13 trägt mindestens einen Magneten 14. Im Ausführungsbeispiel ist der Magnethalter 13 im Wesentlichen ringförmig. Der Magnethalter 13 läuft um die Drehachse 50 um. In Umlaufrichtung 48 sind mehrere Magnete 14 nebeneinander angeordnet. Der Magnethalter 13 umfasst einen Rückschlussring 22. Der Magnet 14 ist an dem Rückschlussring 22 angeordnet. Der Rückschlussring 22 ist metallisch und dient zur Verstärkung des magnetischen Flusses des Magneten 14.

Der Magnethalter 13 bildet vorteilhaft einen Rotor eines Generators des handgeführten Arbeitsgeräts 11. Am nicht dargestellten Kurbelgehäuse des handgeführten Arbeitsgeräts 11 ist vorteilhaft ein Stator des Generators festgelegt. Der Stator umfasst mindestens eine Spule, mit der der Rotor des Generators wechselwirkt. Bei Drehung des Gebläserads 1 um die Drehachse 50 induziert der Magnet 14 des durch den Magnethalter 13 ausgebildeten Rotors eine Spannung in der Spule des Stators. Das so generierte Spannungssignal kann als Signal zur Zündung einer Zündkerze des Verbrennungsmotors 18 genutzt werden.

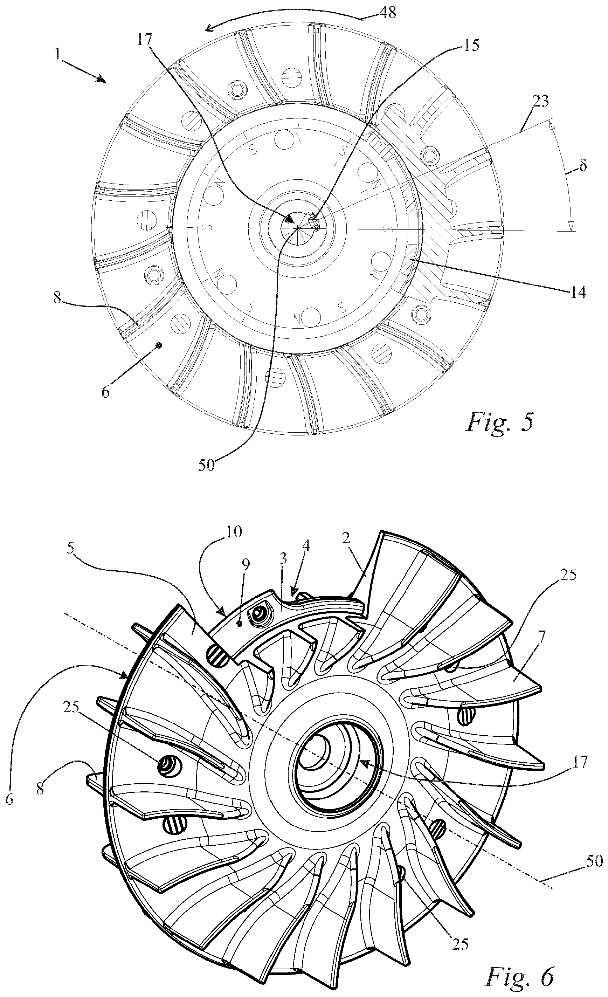

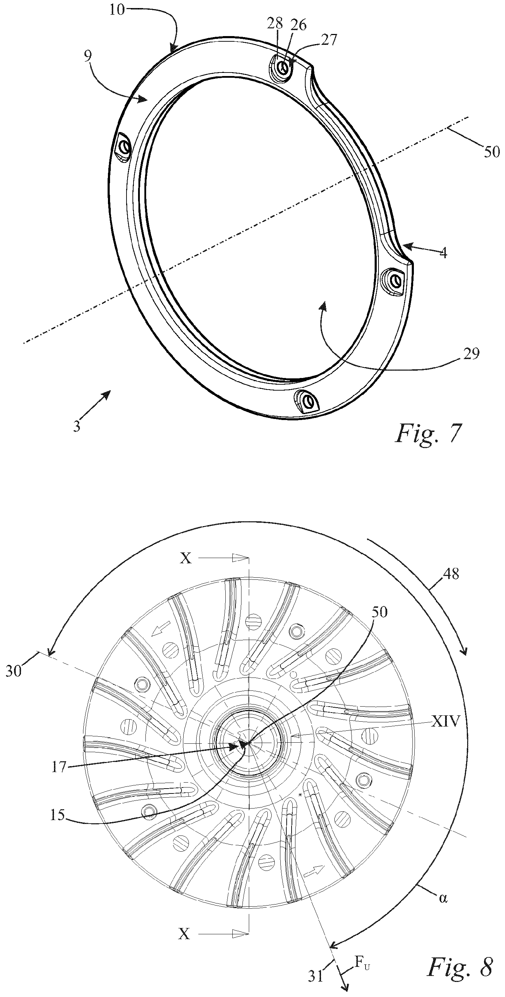

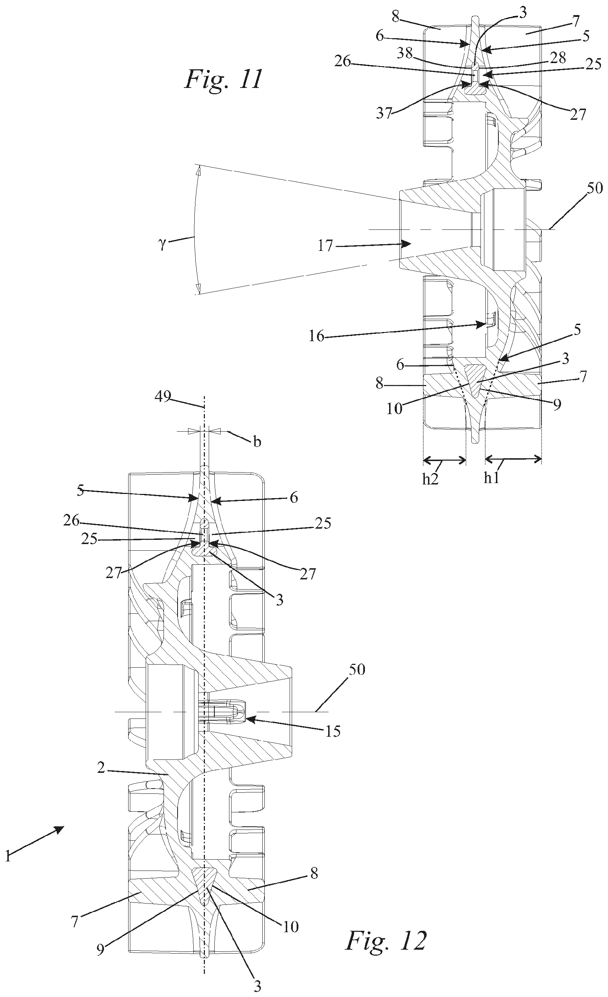

Damit der Zündzeitpunkt genau bestimmt ist, ist die Relativlage des Magneten 14 in Bezug auf die Kurbelwelle entscheidend. Wie in den Fig. 5 und 8 dargestellt, weist der Grundkörper 2 des Gebläserads 1 ein Ausrichtungselement 15 auf. Das Ausrichtungselement 15 ist an einer Aufnahme 17 für die Kurbelwelle des Verbrennungsmotors 18 angeordnet. Die Aufnahme 17 durchdringt den Grundkörper 2 in Richtung der Drehachse 50 vollständig. Wie in Fig. 11 dargestellt besitzt die Aufnahme 17 eine konische Form. Ein Öffnungswinkel γ der Aufnahme 17 öffnet in Richtung auf die Kurbelwelle. Der Öffnungswinkel γ beträgt von 10° bis 30°. Das Ausrichtungselement 15 steht in Radialrichtung gegenüber einem Innenumfang der Aufnahme 17 vor (Figuren 5 und 8).

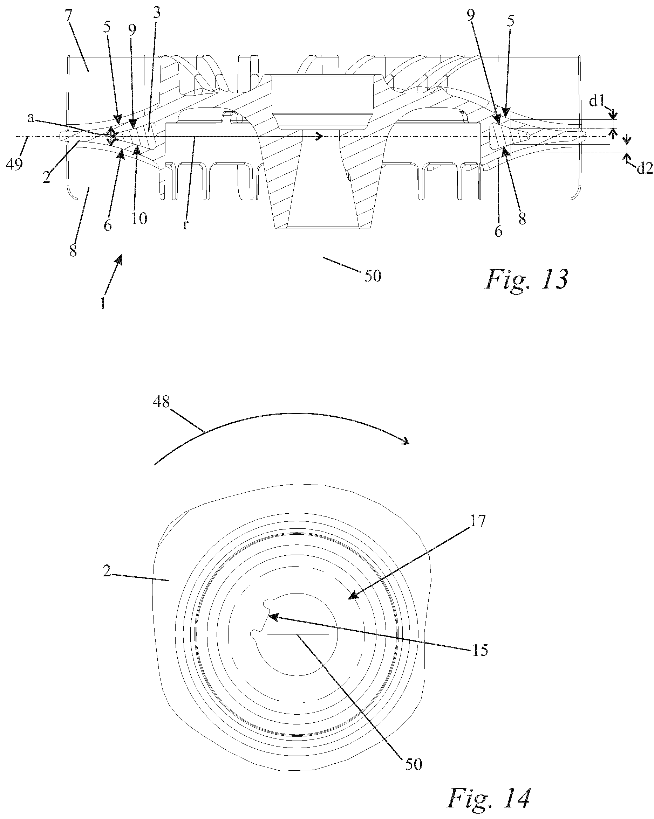

Fig. 14 zeigt in einer Detaildarstellung, dass das Ausrichtungselement 15 gegenüber einer inneren Mantelfläche der konischen Aufnahme 17 vorsteht. An seinen Seiten bezüglich der Umfangsrichtung 48 ist das Ausrichtungselement 15 jeweils durch Vertiefungen in der inneren konischen Mantelfläche der Aufnahme 17 begrenzt.

Die Kurbelwelle des Verbrennungsmotors 18 weist eine mit dem Ausrichtungselement 15 korrespondierende, nicht dargestellte Positioniervorrichtung auf. Die Positioniervorrichtung der Kurbelwelle ist im Ausführungsbeispiel als Kerbe ausgebildet.

Wie in Fig. 5 dargestellt, weist der Magnet 14 einen Südpol und einen Nordpol auf. Das Ausrichtungselement 15 besitzt eine bezüglich der Umfangsrichtung 48 zentrale Stelle 23. Der in Umfangsrichtung 48 gemessene Winkelabstand δ zwischen dem Südpol des Magneten 14 und der zentralen Stelle 23 des Ausrichtungselements 15 ist mit Blick auf den Zündzeitpunkt des Verbrennungsmotors 18 festgelegt. Hierfür ist der Magnet 14 an vorbestimmter Stelle im Magnethalter 13 fixiert, vorzugsweise eingeklebt.

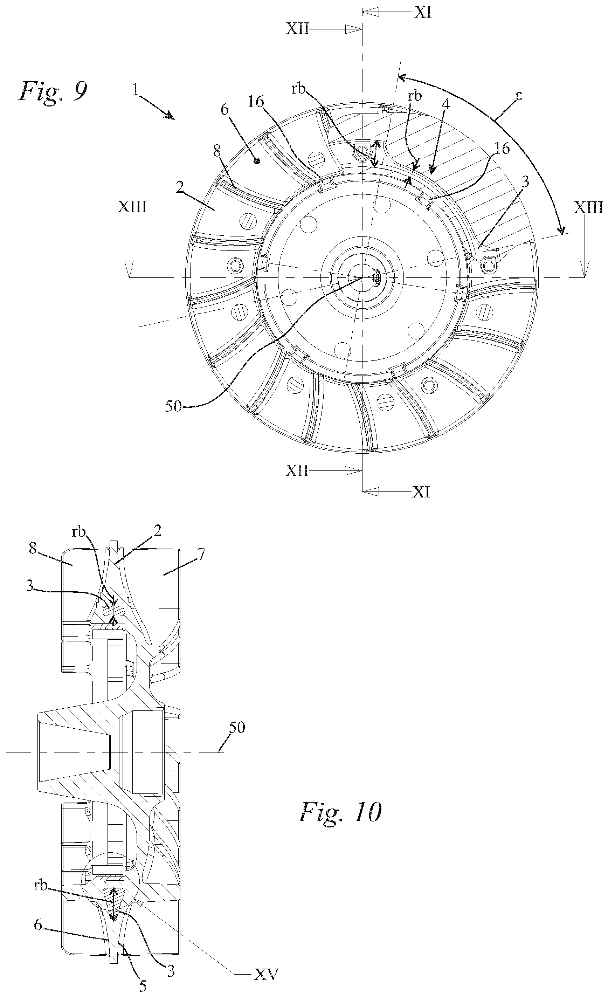

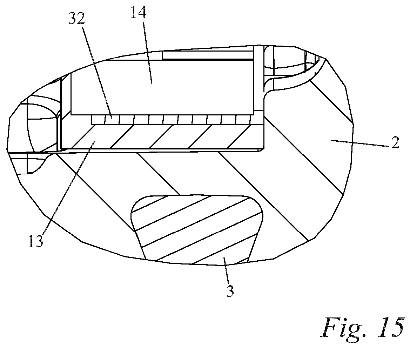

Fig. 15 zeigt den Klebstoff 32 zwischen dem Magnet 14 und dem Magnethalter 13. Der Magnethalter 13 weist eine in Fig. 4 dargestellte Positioniernase 24 auf. Die Positioniernase 24 steht in Richtung der Drehachse 50 auf den Grundkörper 2 des Gebläserads 1 vor. Der Grundkörper 2 weist ein in den Figuren 4 und 9 dargestelltes Vorpositionierelement 16 auf. Das Vorpositionierelement 16 ist im Ausführungsbeispiel als Vertiefung in Richtung der Drehachse im Grundkörper 2 des Gebläserads 1 ausgebildet. Das Vorpositionierelement 16 korrespondiert mit der Positioniernase 24 des Magnethalters 13. Zur Positionierung des Magnethalters 13 auf dem Grundkörper 2 des Gebläserads 1 wird der Magnethalter 13 mittels der Positioniernase 24 und des Vorpositionierelements 16 nach dem Aufbringen eines Klebstoffs auf dem Grundkörper 2 vorpositioniert. Vor dem Aushärten des Klebstoffs wird der Magnethalter 13 mittels einer magnetischen Ausrichtungsvorrichtung relativ zum Grundkörper 2 exakt positioniert, und der Klebstoff härtet in dieser Position des Magnethalters 13 aus.

Das Gebläserad 1 weist ein in Fig. 6 dargestelltes Schwungteil 3 auf. Das Schwungteil 3 ist zumindest teilweise von dem Grundkörper 2 umschlossen. Der Grundkörper 2 ist aus einem ersten Material. Das Schwungteil 3 ist aus einem zweiten Material. Die Dichte des zweiten Materials und die Dichte des ersten Materials sind unterschiedlich groß. Insbesondere beträgt die Dichte des zweiten Materials mehr als das 2fache der Dichte des ersten Materials. Das Schwungteil 3 sorgt dafür, dass das Gebläserad 1 bezüglich der Drehachse 50 eine Unwucht aufweist. Dadurch besitzt das Gebläserad 1 im Betrieb eine radial nach außen zeigende Unwuchtkraft F_{U} (Fig. 8). Das Gebläserad 1 kann so auf der Kurbelwelle des Verbrennungsmotors 18 angeordnet sein, dass die Unwuchtkraft F_{U} des Gebläserads 1 ein Gegengewicht zur durch den Kolben und die Kurbelwangen des Verbrennungsmotors 18 erzeugten Fliehkraft bildet. Das Schwungteil 3 weist bezüglich der Drehachse 50 eine Unwucht auf.

Eine weitere Funktion des Schwungteils 3 liegt im Ausführungsbeispiel in einer Erhöhung des Trägheitsmoments des Gebläserads 1. Das Gebläserad 1 dient im Ausführungsbeispiel als Schwungrad für den Verbrennungsmotor 18. Um einen gleichmäßigen Lauf des Verbrennungsmotors 18 zu erreichen, ist eine hohe Schwungmasse für das als Schwungrad dienende Gebläserad 1 wünschenswert. Gleichzeitig soll das Gesamtgewicht des Verbrennungsmotors 18 und damit auch das Gebläserad 1 insbesondere für den Einsatz in dem handgeführten Arbeitsgerät 11, das im Betrieb vom Bediener getragen wird, möglichst niedrig sein, um ein ergonomisches Arbeiten zu ermöglichen. Die Dichte des zweiten Materials des Schwungteils 3 ist größer als die Dichte des ersten Materials des Grundkörpers 2. Dadurch kann bei kompakter Bauweise des Gebläserads 1 ein hohes Trägheitsmoment des Gebläserads 1 erzielt werden.

Der Grundkörper 2 besitzt die in Fig. 6 dargestellte Drehachse 50. Die Drehachse 50 verläuft von der ersten Außenfläche 5 hin zu der zweiten Außenfläche 6 des Grundkörpers 2 des Gebläserads 1. Das Schwungteil 3 ist in das erste Material des Grundkörpers 2 eingegossen. Das Schwungteil 3 weist eine Oberfläche auf. Der Grundkörper 2 deckt mindestens 80%, insbesondere mindestens 90%, bevorzugt mindestens 95% der Oberfläche des Schwungteils ab. Im Ausführungsbeispiel deckt der Grundkörper 2 das Schwungteil 3 mit Ausnahme von Halteöffnungen 25 vollständig ab.

Wie in den Fig. 11 und 12 dargestellt, erstreckt sich bezüglich der Drehachse 50 auf jeder Seite des Schwungteils 3 eine Halteöffnung 25. Die Halteöffnungen 25 entstehen vorteilhaft während der Herstellung des Gebläserads 1 in einem Gussverfahren. Das Schwungteil 3 wird vor dem Eingießen in den Grundkörper 2 des Gebläserads 1 mittels Halteelementen positioniert. Dies geschieht vorzugsweise in einer Gussform für den Grundkörper 2 des Gebläserads 1. Anschließend wird das Schwungteil 3 mit dem ersten Material des Grundkörpers 2 umgossen. Die Halteelemente zur Halterung des Schwungteils 3 werden ebenfalls von dem ersten Material umgossen. Anschließend werden die Halteelemente entfernt und zurück bleiben am Ort der Halteelemente die Halteöffnungen 25 im Grundkörper 2 des Gebläserads 1.

Es kann auch vorgesehen sein, dass der Grundkörper 2 die Oberfläche des Schwungteils 3 zu 100 % abdeckt. In diesem Fall sind die Halteöffnungen 25 nachträglich mit dem ersten Material des Grundkörpers oder mit einem anderen Material verfüllt. Es kann vorgesehen sein, dass der Grundkörper 2 aus zwei verschiedenen Materialien gebildet ist.

Im in das Arbeitsgerät 11 eingebauten Zustand des Gebläserads 1 verläuft die Drehachse 50 durch die Aufnahme 17 für die Kurbelwelle des Verbrennungsmotors 18.

Wie in Fig. 7 dargestellt, weist das Schwungteil 3 vorteilhaft zumindest eine Radialpositionieröffnung 26 auf. Die Radialpositionieröffnung 26 durchdringt das Schwungteil 3 in Richtung der Drehachse 50 vollständig.

Das Schwungteil 3 umfasst insbesondere eine erste Vertiefung 27. Das Schwungteil 3 besitzt eine erste Seitenfläche 9. Die erste Vertiefung 27 ist vorzugsweise in die erste Seitenfläche 9 des Schwungteils 3 eingebracht. Das Schwungteil 3 weist eine zweite Seitenfläche 10 auf. Wie in den Fig. 11 und 12 dargestellt, ist in die zweite Seitenfläche 10 eine zweite Vertiefung 37 eingebracht.

Die erste Seitenfläche 9 und die zweite Seitenfläche 10 weisen bezüglich der Drehachse 50 vorteilhaft in entgegengesetzte Richtungen. Die erste Vertiefung 27 in der ersten Seitenfläche 9 des Schwungteils 3, die Radialpositionieröffnung 26 und die zweite Vertiefung 37 in der zweiten Seitenfläche 10 des Schwungteils 3 liegen in Richtung der Drehachse 50 hintereinander. Die Radialpositionieröffnung 26 verbindet im Ausführungsbeispiel die erste Vertiefung 27 mit der zweiten Vertiefung 37. Durch die Radialpositionieröffnung 26 ist vorteilhaft eine in Richtung der Drehachse 50 durch das Schwungteil 3 durchgehende Öffnung geschaffen. Die erste Vertiefung 27, die Radialpositionieröffnung 26 und die zweite Vertiefung 37 bilden im Ausführungsbeispiel gemeinsam die Halteöffnung 25. Es kann auch vorgesehen sein, dass die Halteöffnung lediglich durch eine Vertiefung im Schwungteil 3 gebildet ist. Im Ausführungsbeispiel sind in der ersten Seitenfläche 9 des Schwungteils 3 vier erste Vertiefungen 27 vorgesehen. In der zweiten Seitenfläche 10 des Schwungteils 3 sind vier zweite Vertiefungen 37 vorgesehen. Dementsprechend sind insgesamt vier Radialpositionieröffnungen 26 im Schwungteil 23 angeordnet. Insgesamt weist das Schwungteil vier Halteöffnungen 25 auf. Ein in einer Ebene senkrecht zur Drehachse 50 gemessener größter Durchmesser der ersten Vertiefung 27 ist größer als ein in derselben Ebene gemessener größter Durchmesser der zugeordneten Radialpositionieröffnung 26. Die erste Vertiefung 27 weist einen ersten Boden 28 auf (Fig. 7). Ein in einer Ebene senkrecht zur Drehachse 50 gemessener größter Durchmesser der zweiten Vertiefung 37 ist größer als ein in derselben Ebene gemessener größter Durchmesser der zugeordneten Radialpositionieröffnung 26. Die zweite Vertiefung 37 weist einen zweiten Boden 38 auf.

Zur Positionierung des Schwungteils 3 in der Gussform für den Grundkörper 2 des Gebläserads 1 sind vorteilhaft mindestens zwei nicht dargestellte Halteelemente vorgesehen. Mindestens eines der Halteelemente, vorteilhaft das erste Halteelement, weist eine Stirnseite vorzugsweise mit einem Vorsprung auf. Die Stirnseite des ersten Halteelements liegt am ersten Boden 28 der ersten Vertiefung 27 des Schwungteils 3 an. Der Vorsprung des ersten Halteelements dringt zumindest teilweise in die Radialpositionieröffnung 26 des Schwungteils 3 ein. Der Vorsprung liegt an der Umfangseite der Radialpositionieröffnung 26 an.

Das erste Halteelement liegt mit seiner Stirnseite am ersten Boden 28 der ersten Vertiefung 27 in der ersten Seitenfläche 9 des Schwungteils 3 an. Das zweite Halteelement liegt mit seiner Stirnseite an dem zweiten Boden 38 der zweiten Vertiefung 37 in der zweiten Seitenfläche 10 des Schwungteils 3 an. Der erste Boden 27 liegt dem zweiten Boden 37 bezüglich der Richtung der Drehachse 50 und bezüglich der Radialpositionieröffnung 26 gegenüber. Das erste Halteelement ist der ersten Seitenfläche 9 des Schwungteils 3 zugeordnet. Das zweite Halteelement ist der zweiten Seitenfläche 10 des Schwungteils 3 zugeordnet. Das Schwungteil 3 ist zwischen dem ersten Halteelement und dem zweiten Halteelement eingeklemmt. Auf diese Weise wird eine Positionierung des Schwungteils 3 bezüglich der Axialrichtung der Drehachse 50 erreicht.

Zur Radialpositionierung des Schwungteils 3 bezüglich der Drehachse 50 ist ein weiteres erstes Halteelement vorgesehen, das mit seinem Vorsprung in eine weitere Radialpositionieröffnung 26 des Schwungteils 3 eingreift. Dieses weitere erste Halteelement liegt ebenfalls mit seinem Vorsprung an einem Innenumfang der weiteren Radialpositionieröffnung 26 an. Durch die Anlage des ersten Halteelements am Innenumfang der Radialpositionieröffnung 26 und des weiteren ersten Halteelements an der weiteren Radialpositionieröffnung 26 wird eine Radialpositionierung des Schwungteils 3 bezüglich der Drehachse 50 erreicht.

Im Ausführungsbeispiel sind vier erste Halteelemente und vier zweite Halteelemente vorgesehen.

Wie in Fig. 7 dargestellt, weist das Schwungteil 3 eine Zentralöffnung 29 auf. Die Zentralöffnung 29 durchdringt das Schwungteil 3 in Richtung der Drehachse 50 vollständig. Das Schwungteil 3 ist so im Grundkörper 2 angeordnet, dass die Drehachse 50 des Gebläserads 1 durch die Zentralöffnung 29 des Schwungteils 3 hindurch verläuft (Fig. 6 und 7). Das Schwungteil 3 umgreift die Drehachse 50. Das Schwungteil 3 läuft geschlossen um die Drehachse 50 um. Das Schwungteil 3 ist im Wesentlichen ringförmig. Das Schwungteil 3 kann aber auch jede andere Form aufweisen. Wichtig ist, dass das Schwungteil 3 die Drehachse 50 geschlossen umgreift. Im Ausführungsbeispiel ist das Schwungteil 3 auf seiner inneren Umfangsseite in einer Ebene senkrecht zur Drehachse 50 durch einen kreisförmigen Innenumfang begrenzt.

Die Unwucht des Schwungteils 3 bezüglich der Drehachse 50 ist vorteilhaft durch eine Ausnehmung 4 gebildet.

Durch die Ausnehmung 4 ist eine in Radialrichtung bezüglich der Drehachse 50 gemessene Radialbreite rb des Schwungteils 3 vorteilhaft über einen in Fig. 9 dargestellten Winkelbereich ε reduziert. Die Radialbreite rb des Schwungteils 3 ist jeweils ausgehend von dem Innenumfang des Schwungteils 3 in Radialrichtung bezüglich der Drehachse 50 von der Drehachse 50 weg gemessen. Im Ausführungsbeispiel beträgt der Winkelbereich ε von 40° bis 100°, insbesondere von 50° bis 90°, bevorzugt von 60° bis 80°. Im Winkelbereich ε mit reduzierter Radialbreite rb beträgt die Radialbreite rb weniger als die Hälfte der maximalen gemessenen Radialbreite. Dies ist auch in Fig. 10 dargestellt. Durch die Ausnehmung 4 weist das Gebläserad 1 eine Unwucht auf. Bei einer Drehung um die Drehachse 50 wirkt die in Fig. 8 eingezeichnete resultierende Unwuchtkraft F_{U}.

Es kann auch vorgesehen sein, dass die Unwucht des Schwungteils 3 bezüglich der Drehachse 50 anstatt durch eine Ausnehmung durch eine Erhebung gebildet ist. Ansonsten kann eine durch eine Erhebung gebildete Unwucht dieselben Eigenschaften aufweisen wie die durch die Ausnehmung gebildete Unwucht.

Wie in Fig. 10 dargestellt, weist das Schwungteil 3 in einer Schnittebene, die die Drehachse 50 enthält, vorzugsweise einen Abschnitt mit einer im Wesentlichen dreieckigen Form auf.

In einer Schnittebene senkrecht zur Drehachse 50 weist das Schwungteil 3 bis auf den Bereich der Ausnehmung 4 einen kreisförmigen Außenumfang auf. Mit Ausnahme des Winkelbereichs ε ist die Außenkontur des Schwungteils 3 in einer Ebene senkrecht zur Drehachse 50 kreisförmig.

Wie Fig. 8 zeigt, ist das Ausrichtelement 15 zur Ausrichtung des Gebläserads 1 relativ zu einer Kurbelwelle des Verbrennungsmotors 18 in Umfangsrichtung 48 an einer Ausrichtwinkelposition 30 bezüglich der Drehachse 50 angeordnet. Im Betrieb des Gebläserads 1 wirkt die Unwuchtkraft F_{U} bezüglich der Drehachse 50 an der Stelle einer Unwuchtwinkelposition 31. Die Unwuchtwinkelposition 31 ist bezüglich des Gebläserads 1 im Betrieb des Gebläserads 1 unverändert. Sie dreht sich mit dem Gebläserad 1 mit. Dasselbe gilt für die Ausrichtwinkelposition 30. Ein ausgehend von der Ausrichtwinkelposition 30 in Umfangsrichtung 48 entgegen der Drehrichtung des Gebläserads 1 gemessener Unwuchtwinkel α zwischen der Ausrichtwinkelposition 30 und der Unwuchtwinkelposition 31 beträgt von 180° bis 270°, insbesondere von 200° bis 250°, bevorzugt von 220° bis 230°. Dadurch kann das Gebläserad 1 so auf der Kurbelwelle des Verbrennungsmotors 18 angeordnet werden, dass sich die Unwuchtwinkelposition bei einem definierten Kurbelwinkel befindet, wenn sich der Kolben des Verbrennungsmotors im oberen Totpunkt befindet. Dieser Kurbelwinkel ist bezüglich der Drehachse 50 vom oberen Totpunkt aus in Kurbelrichtung der Kurbelwelle gemessen. Durch die definierte Unwuchtwinkelposition ist ein Gegengewicht zu der Unwucht erzeugt, die durch den Kolben und die Kurbelwangen des Verbrennungsmotors 18 entsteht. Auf diese Weise können Biegespannungen im in Fig. 1 dargestellten Ausleger 12 des handgeführten Arbeitsgeräts minimiert werden, da bestimmte Schwingungsmodi unterdrückt werden.

Im unteren Bereich der Fig. 11 sind die Trennflächen zwischen der ersten Lüfterradschaufel 7 und dem Grundkörper 2 des Gebläserads 1 und zwischen der zweiten Lüfterradschaufel 8 und dem Grundkörper 2 des Gebläserads 1 gestrichelt eingezeichnet. Diese Darstellung und auch Fig. 13 zeigen, dass die erste Seitenfläche 9 des Schwungteils 3 der ersten Außenfläche 5 des Grundkörpers 2 zugewandt ist. Die zweite Seitenfläche 10 des Schwungteils 3 ist der zweiten Außenfläche 6 des Grundkörpers 2 zugewandt. Eine Kontur der ersten Seitenfläche 9 folgt einer Kontur der ersten Außenfläche 5. Eine Kontur der zweiten Seitenfläche 10 folgt einer Kontur der zweiten Außenfläche 6. Dies gilt zumindest für Bereiche des Schwungteils 3 außerhalb der Vertiefungen 27. Wie in Fig. 13 dargestellt, weist die erste Seitenfläche 9 zu der ersten Außenfläche 5 einen in Richtung der Drehachse 50 gemessenen ersten Abstand d1 auf. Der erste Abstand d1 ist konstant. Dies bedeutet, dass der Abstand d1 immer gleich groß ist, unabhängig davon, in welchem Abstand zur Drehachse 50 der Abstand d1 gemessen ist. Die zweite Seitenfläche 10 weist zu der zweiten Außenfläche 6 einen in Richtung der Drehachse 50 gemessenen zweiten Abstand d2 auf. Der zweite Abstand d2 ist konstant. Dies bedeutet, dass der zweite Abstand d2 unabhängig davon, in welchem Abstand zu der Drehachse 50 der zweite Abstand d2 gemessen ist, der zweite Abstand d2 immer gleich groß ist.

Wie ebenfalls in Fig. 13 dargestellt, besitzt die erste Außenfläche 5 zu der zweiten Außenfläche 6 einen in Richtung der Drehachse 50 gemessenen Außenabstand a. Der Außenabstand a nimmt mit zunehmendem Radialabstand r zur Drehachse 50 ab. Die erste Außenfläche 5 des Grundkörpers 2 ist in einem radial innen liegenden Bereich konvex. Die zweite Außenfläche 6 des Grundkörpers 2 ist in einem radial innen liegenden Bereich konvex. Die erste Außenfläche 5 des Grundkörpers 2 ist in einem radial außen liegenden Bereich konkav. Die zweite Außenfläche 6 des Grundkörpers 2 ist in einem radial außen liegenden Bereich konkav. Dies gilt zumindest für den Bereich des Grundkörpers, auf dem Lüfterradschaufeln 7, 8 angeordnet sind.

Wie in Fig. 12 dargestellt, besitzt die erste Außenfläche 5 zu der zweiten Außenfläche 6 einen in Richtung der Drehachse 50 gemessenen kleinsten Abstand b. Ein nicht dargestellter größter Abstand zwischen der ersten Außenfläche 5 und der zweiten Außenfläche 6 beträgt mindestens das Doppelte des kleinsten Abstands b.

Aus einer Zusammenschau der Fig. 7 und 12 ergibt sich, dass das Schwungteil 3 bezüglich einer senkrecht zur Drehachse 50 verlaufenden Symmetrieebene 49 symmetrisch ist. Das Schwungteil 3 weist einen Massenschwerpunkt auf. Der Massenschwerpunkt liegt bezüglich der Richtung der Drehachse 50 in der Mitte zwischen der ersten Außenfläche 5 und der zweiten Außenfläche 6. Der Massenschwerpunkt liegt in der Symmetrieebene 49.

Wie in den Figuren 4 und 5 dargestellt, ist der erste Magnet 14 auf der zweiten Außenfläche 6 des Grundkörpers 2 des Gebläserads 1 angeordnet. Die ersten Lüfterradschaufeln 7 sind auf der ersten Außenfläche 5 des Grundkörpers 2 des Gebläserads 1 angeordnet. Die zweiten Lüfterradschaufeln 8 sind auf der zweiten Außenfläche 6 des Grundkörpers 2 des Gebläserads 1 angeordnet.

Fig. 11 zeigt eine erste maximale Höhe h1 der ersten Lüfterradschaufeln 7. Die zweiten Lüfterradschaufeln 8 weisen eine zweite maximale Höhe h2 auf. Die erste maximale Höhe h1 ist ausgehend von der ersten Außenfläche 5 des Grundkörpers 2 in Richtung der Drehachse 50 in Richtung weg vom Grundkörper 2 gemessen. Die zweite maximale Höhe h2 ist ausgehend von der zweiten Außenfläche 6 des Grundkörpers 2 in Richtung der Drehachse 50 in Richtung weg vom Grundkörper 2 gemessen. Die erste maximale Höhe h1 ist vorteilhaft größer als die zweite maximale Höhe h2.

Das Schwungteil 3 ist in das erste Material des Grundkörpers 2 eingegossen. Der Grundkörper 2 kontaktiert das Schwungteil 3 unmittelbar. Das Schwungteil 3 ist zumindest teilweise von dem Grundkörper 2 umschlossen (Fig. 6, 11 und 12). Das Schwungteil 3 steht nicht über den Grundkörper 2 hervor. Das Schwungteil 3 steht nicht über eine Außenkontur des Grundkörpers 2 hervor, wobei die Außenkontur ohne Berücksichtigung der Halteöffnungen 25 gebildet ist. Die Außenkontur entspricht der Außenkontur eines Grundkörpers 2, bei dem die Halteöffnungen 25 so verfüllt sind, dass die Füllungen die Oberfläche des Grundkörpers stetig fortsetzen. Es kann auch vorgesehen sein, dass das Schwungteil 3 vollständig von dem Grundkörper 2 umschlossen ist.

Das erste Material des Grundkörpers 2 weist einen ersten Wärmeausdehnungskoeffizienten auf. Das zweite Material des Schwungteils 3 weist einen zweiten Wärmeausdehnungskoeffizienten auf. Der zweite Wärmeausdehnungskoeffizient beträgt 70% bis 110%, insbesondere 80% bis 100% bevorzugt 85% bis 95% des ersten Wärmeausdehnungskoeffizienten. Der Wärmeausdehnungskoeffizient des ersten Materials ist etwa gleich groß wie der Wärmeausdehnungskoeffizient des zweiten Materials. Der Wärmeausdehnungskoeffizient des ersten Materials beträgt von 21·10⁻⁶ K⁻¹ bis 23·10⁻⁶ K⁻¹. Der Wärmeausdehnungskoeffizient des zweiten Materials beträgt von 17·10⁻⁶ K⁻¹ bis 21·10⁻⁶ K⁻¹. Das erste Material ist eine Leichtmetalllegierung. Das zweite Material ist eine Schwermetalllegierung. Das erste Material ist im Ausführungsbeispiel eine Aluminiumlegierung. Es kann auch vorgesehen sein, dass das erste Material eine Magnesiumlegierung ist. Das zweite Material ist im Ausführungsbeispiel Messing.

Dadurch, dass das Schwungteil 3 in den Grundkörper 2 aufgenommen ist, ist die Luftführung des Gebläserads 1 durch das Schwungteil 3 ungestört. Das Schwungteil 3 hindert die Luftführung der von dem Gebläserad 1 geförderten Luft in keiner oder allenfalls geringer Weise. Insbesondere sind die in Fig. 3 dargestellten Luftleitflächen 20 und 21 nicht durch ein über den Grundkörper 2 hervorstehendes Schwungteil 3 gestört. Durch die beschriebene Auswahl des ersten Materials und des zweiten Materials anhand der Wärmeausdehnungskoeffizienten und dadurch, dass das Schwungteil 3 die Drehachse 50 geschlossen umgreift, weist das Gebläserad 1 ein äußerst vorteilhaftes Berstverhalten auf.

Das Gebläserad 1 wird in einem Gussverfahren hergestellt. Hierbei wird in einem Gussverfahrensschritt das Schwungteil 3 in das erste Material des Grundkörpers 2 eingegossen. Die Position des Ausrichtungselements 15 zur Ausrichtung des Gebläserads 1 relativ zu der Kurbelwelle des Verbrennungsmotors 18 wird im selben Gussverfahrensschritt festgelegt, in dem das Schwungteil 3 in den Grundkörper 2 eingegossen wird. Dadurch ist eine exakte Positionierung der Unwucht des Gebläserads 1 relativ zu dem Ausrichtungselement 15 erreicht. Der in Fig. 8 dargestellte Unwuchtwinkel α kann mit einer sehr geringen Fehlertoleranz eingehalten werden. Die Unwuchtwinkelposition 31 kann sehr viel genauer positioniert werden als bei einem Gebläserad, bei dem das Schwungteil nach der Fertigung des Grundkörpers des Gebläserads am Grundkörper angebracht wird. Durch die genaue Positionierung der Unwuchtwinkelposition 31 relativ zu dem Ausrichtungselement 15 kann eine Reduzierung der vom Verbrennungsmotor 19 erzeugten Schwingungen erreicht werden. Dadurch ist auch das Gebläserad 1 geringeren Vibrationen ausgesetzt und die Stabilität für das Gebläserad 1 im Betrieb erhöht.

In dem Gussverfahren wird zunächst das Schwungteil 3 mittels zumindest zwei erster Halteelemente so in einer Gussform für den Grundkörper 2 des Gebläserads 1 positioniert, dass die Relativlage der Unwucht des Schwungteils 3 und des Teils der Gussform, durch das Ausrichtungselements 15 im Gussverfahren geformt wird, wie gewünscht eingestellt ist. Anschließend wird das erste Material des Grundkörpers 2 in die Gussform gegossen. Hierbei wird das Schwungteil 3 vorteilhaft in den Grundkörper 2 eingegossen. Die Position der Unwucht und des Ausrichtungselements 15 werden im selben Gussverfahrensschritt festgelegt. Dadurch ist eine exakte Relativpositionierung von Unwucht und Ausrichtungselement 15 möglich.

## Patentansprüche

1. Gebläserad, umfassend:
- einen Grundkörper (2) mit einer Drehachse (50) und
- ein Schwungteil (3),
wobei der Grundkörper (2) aus einem ersten Material ist, wobei das Schwungteil (3) aus einem zweiten Material ist, wobei die Dichte des zweiten Materials und die Dichte des ersten Materials unterschiedlich groß sind, wobei das Schwungteil (3) eine Oberfläche aufweist, wobei das Schwungteil (3) in das erste Material des Grundkörpers (2) eingegossen ist, wobei die Dichte des zweiten Materials größer ist als die Dichte des ersten Materials, und wobei das Schwungteil (3) zumindest teilweise von dem Grundkörper (2) umschlossen ist, so dass der Grundkörper (2) mindestens 80%, insbesondere mindestens 90%, bevorzugt mindestens 95% der Oberfläche des Schwungteils (3) abdeckt,
**dadurch gekennzeichnet, dass** das Gebläserad (1) so ausgelegt ist, dass das erste Material einen ersten Wärmeausdehnungskoeffizienten aufweist, dass das zweite Material einen zweiten Wärmeausdehnungskoeffizienten aufweist, und dass der zweite Wärmeausdehnungskoeffizient 70% bis 110%, insbesondere 80% bis 100%, bevorzugt 85% bis 95% des ersten Wärmeausdehnungskoeffizienten beträgt.

2. Gebläserad nach Anspruch 1,
**dadurch gekennzeichnet, dass** das Gebläserad (1) aufgrund des Schwungteils (3) eine Unwucht bezüglich der Drehachse (50) aufweist.

3. Gebläserad nach Anspruch 1 oder 2,
**dadurch gekennzeichnet, dass** das Schwungteil (3) bezüglich einer senkrecht zur Drehachse (50) verlaufenden Symmetrieebene (49) symmetrisch ist.

4. Gebläserad nach einem der Ansprüche 1 bis 3,
**dadurch gekennzeichnet, dass** die Dichte des zweiten Materials mehr als das 2fache der Dichte des ersten Materials beträgt.

5. Gebläserad nach einem der Ansprüche 1 bis 4,
**dadurch gekennzeichnet, dass** der Grundkörper (2) eine erste Außenfläche (5) und eine zweite Außenfläche (6) aufweist, und dass die erste Außenfläche (5) und die zweite Außenfläche (6) bezüglich der Drehachse (50) in entgegengesetzte Richtungen weisen.

6. Gebläserad nach Anspruch 5,
**dadurch gekennzeichnet, dass** auf dem Grundkörper (2) auf der ersten Außenfläche (5) erste Lüfterradschaufeln (7) angeordnet sind, und dass auf der zweiten Außenfläche (6) zweite Lüfterradschaufeln (8) angeordnet sind.

7. Gebläserad nach Anspruch 6,
**dadurch gekennzeichnet, dass** benachbarte erste Lüfterradschaufeln (7), die auf der ersten Außenfläche (5) angeordnet sind, auf der ersten Außenfläche (5) eine erste Luftleitfläche (20) begrenzen, und dass benachbarte zweite Lüfterradschaufeln (8), die auf der zweiten Außenfläche (6) angeordnet sind, auf der zweiten Außenfläche (6) eine zweite Luftleitfläche (21) begrenzen.

8. Gebläserad nach einem der Ansprüche 5 bis 7,
**dadurch gekennzeichnet, dass** das Schwungteil (3) einen Massenschwerpunkt aufweist, und dass der Massenschwerpunkt bezüglich der Richtung der Drehachse (50) in der Mitte zwischen der ersten Außenfläche (5) und der zweiten Außenfläche (6) liegt.

9. Gebläserad nach einem der Ansprüche 5 bis 8,
**dadurch gekennzeichnet, dass** das Schwungteil (3) eine erste Seitenfläche (9) aufweist, die der ersten Außenfläche (5) des Grundkörpers (2) zugewandt ist, dass das Schwungteil (3) eine zweite Seitenfläche (10) aufweist, die der zweiten Außenfläche (6) des Grundkörpers (2) zugewandt ist, dass eine Kontur der ersten Seitenfläche (9) einer Kontur der ersten Außenfläche (5) folgt, und dass eine Kontur der zweiten Seitenfläche (10) einer Kontur der zweiten Außenfläche (6) folgt.

10. Gebläserad nach einem der Ansprüche 5 bis 9,
**dadurch gekennzeichnet, dass** ein zwischen der ersten Außenfläche (5) und der zweiten Außenfläche (6) in Richtung der Drehachse (50) gemessener Außenabstand (a) mit zunehmendem Radialabstand (r) zur Drehachse (50) abnimmt.

11. Gebläserad nach einem der Ansprüche 1 bis 10,
**dadurch gekennzeichnet, dass** der Wärmeausdehnungskoeffizient des ersten Materials von 21·10⁻⁶ K⁻¹ bis 23·10⁻⁶ K⁻¹ beträgt, und dass der Wärmeausdehnungskoeffizient des zweiten Materials von 17·10⁻⁶ K⁻¹ bis 21·10⁻⁶ K⁻¹ beträgt.

12. Gebläserad nach einem der Ansprüche 1 bis 11,
**dadurch gekennzeichnet, dass** das erste Material eine Aluminiumlegierung ist, und dass das zweite Material eine Messinglegierung ist.

## Claims

1. Fan wheel, comprising:
- a base body (2) having an axis of rotation (50), and
- a flyweight part (3),
wherein the base body (2) is made of a first material, wherein the flyweight part (3) is made of a second material, wherein the density of the second material and the density of the first material are different, wherein the flyweight part (3) has a surface, wherein the flyweight part (3) is cast into the first material of the base body (2), wherein the density of the second material is greater than the density of the first material, and wherein the flyweight part (3) is at least partially enclosed by the base body (2), so that the base body (2) covers at least 80%, in particular at least 90%, preferably at least 95%, of the surface of the flyweight part (3), **characterized in that** the fan wheel (1) is configured such that the first material has a first coefficient of thermal expansion, that the second material has a second coefficient of thermal expansion, and that the second coefficient of thermal expansion is 70% to 110%, in particular 80% to 100%, preferably 85% to 95%, of the first coefficient of thermal expansion.

2. Fan wheel according to claim 1,
**characterized in that** the fan wheel (1) has an imbalance with respect to the axis of rotation (50) due to the flyweight part (3).

3. Fan wheel according to claim 1 or 2,
**characterized in that** the flyweight part (3) is symmetrical with respect to a plane of symmetry (49) extending perpendicularly to the axis of rotation (50).

4. Fan wheel according to one of claims 1 to 3,
**characterized in that** the density of the second material is more than twice the density of the first material.

5. Fan wheel according to one of claims 1 to 4,
**characterized in that** the base body (2) has a first outer surface (5) and a second outer surface (6), and that the first outer surface (5) and the second outer surface (6) face in opposite directions with respect to the axis of rotation (50).

6. Fan wheel according to claim 5,
**characterized in that** first fan blades (7) are arranged on the base body (2) on the first outer surface (5), and that second fan blades (8) are arranged on the second outer surface (6).

7. Fan wheel according to claim 6,
**characterized in that** adjacent first fan blades (7), which are arranged on the first outer surface (5), delimit a first air-guiding surface (20) on the first outer surface (5), and that adjacent second fan blades (8), which are arranged on the second outer surface (6), delimit a second air-guiding surface (21) on the second outer surface (6).

8. Fan wheel according to one of claims 5 to 7,
**characterized in that** the flyweight part (3) has a center of mass, and that the center of mass is located, with respect to the direction of the axis of rotation (50), centrally between the first outer surface (5) and the second outer surface (6).

9. Fan wheel according to one of claims 5 to 8,
**characterized in that** the flyweight part (3) has a first side surface (9), which faces the first outer surface (5) of the base body (2), that the flyweight part (3) has a second side surface (10), which faces the second outer surface (6) of the base body (2), that a contour of the first side surface (9) follows a contour of the first outer surface (5), and that a contour of the second side surface (10) follows a contour of the second outer surface (6).

10. Fan wheel according to one of claims 5 to 9,
**characterized in that** an outer distance (a), measured between the first outer surface (5) and the second outer surface (6) in the direction of the axis of rotation (50), decreases with increasing radial distance (r) from the axis of rotation (50).

11. Fan wheel according to one of claims 1 to 10,
**characterized in that** the coefficient of thermal expansion of the first material is from 21·10⁻⁶ K⁻¹ to 23·10⁻⁶ K⁻¹, and that the coefficient of thermal expansion of the second material is from 17·10⁻⁶ K⁻¹ to 21·10⁻⁶ K⁻¹.

12. Fan wheel according to one of claims 1 to 11,
**characterized in that** the first material is an aluminum alloy, and that the second material is a brass alloy.

## Revendications

1. Roue de ventilateur, comprenant :
- un corps de base (2) ayant un axe de rotation (50), et
- une masse d'inertie (3),
le corps de base (2) étant réalisé en un premier matériau, la masse d'inertie (3) étant réalisée en un deuxième matériau, la densité du deuxième matériau et la densité du premier matériau étant différentes, la masse d'inertie (3) présentant une surface, la masse d'inertie (3) étant moulée dans le premier matériau du corps de base (2), la densité du deuxième matériau étant supérieure à la densité du premier matériau, et la masse d'inertie (3) étant au moins partiellement entourée par le corps de base (2), de sorte que le corps de base (2) recouvre au moins 80 %, notamment au moins 90 %, de préférence au moins 95 %, de la surface de la masse d'inertie (3),
**caractérisé en ce que** la roue de ventilateur (1) est conçue de telle sorte que le premier matériau présente un premier coefficient de dilatation thermique, que le deuxième matériau présente un deuxième coefficient de dilatation thermique, et que le deuxième coefficient de dilatation thermique est de 70 % à 110 %, notamment de 80 % à 100 %, de préférence de 85 % à 95 %, du premier coefficient de dilatation thermique.

2. Roue de ventilateur selon la revendication 1,
**caractérisée en ce que** la roue de ventilateur (1) présente, en raison de la masse d'inertie (3), un balourd par rapport à l'axe de rotation (50).

3. Roue de ventilateur selon la revendication 1 ou 2,
**caractérisée en ce que** la masse d'inertie (3) est symétrique par rapport à un plan de symétrie (49) s'étendant perpendiculairement à l'axe de rotation (50).

4. Roue de ventilateur selon l'une des revendications 1 à 3,
**caractérisée en ce que** la densité du deuxième matériau est supérieure au double de la densité du premier matériau.

5. Roue de ventilateur selon l'une des revendications 1 à 4,
**caractérisée en ce que** le corps de base (2) présente une première surface extérieure (5) et une deuxième surface extérieure (6), et que la première surface extérieure (5) et la deuxième surface extérieure (6) sont orientées dans des directions opposées par rapport à l'axe de rotation (50).

6. Roue de ventilateur selon la revendication 5,
**caractérisée en ce que** de premières aubes de ventilateur (7) sont disposées sur le corps de base (2) au niveau de la première surface extérieure (5), et que de deuxièmes aubes de ventilateur (8) sont disposées sur la deuxième surface extérieure (6).

7. Roue de ventilateur selon la revendication 6,
**caractérisée en ce que** des premières aubes de ventilateur (7) voisines, disposées sur la première surface extérieure (5), délimitent sur la première surface extérieure (5) une première surface de guidage d'air (20), et que des deuxièmes aubes de ventilateur (8) voisines, disposées sur la deuxième surface extérieure (6), délimitent sur la deuxième surface extérieure (6) une deuxième surface de guidage d'air (21).

8. Roue de ventilateur selon l'une des revendications 5 à 7,
**caractérisée en ce que** la masse d'inertie (3) présente un centre de gravité de masse, et que le centre de gravité de masse est situé, dans la direction de l'axe de rotation (50), au milieu entre la première surface extérieure (5) et la deuxième surface extérieure (6).

9. Roue de ventilateur selon l'une des revendications 5 à 8,
**caractérisée en ce que** la masse d'inertie (3) présente une première face latérale (9) tournée vers la première surface extérieure (5) du corps de base (2), une deuxième face latérale (10) tournée vers la deuxième surface extérieure (6) du corps de base (2), qu'un contour de la première face latérale (9) suit un contour de la première surface extérieure (5), et qu'un contour de la deuxième face latérale (10) suit un contour de la deuxième surface extérieure (6).

10. Roue de ventilateur selon l'une des revendications 5 à 9,
**caractérisée en ce qu'**une distance extérieure (a), mesurée entre la première surface extérieure (5) et la deuxième surface extérieure (6) dans la direction de l'axe de rotation (50), diminue lorsque la distance radiale (r) par rapport à l'axe de rotation (50) augmente.

11. Roue de ventilateur selon l'une des revendications 1 à 10,
**caractérisée en ce que** le coefficient de dilatation thermique du premier matériau est de 21·10⁻⁶ K⁻¹ à 23·10⁻⁶ K⁻¹, et que le coefficient de dilatation thermique du deuxième matériau est de 17·10⁻⁶ K⁻¹ à 21·10⁻⁶ K⁻¹.

12. Roue de ventilateur selon l'une des revendications 1 à 11,
**caractérisée en ce que** le premier matériau est un alliage d'aluminium, et que le deuxième matériau est un alliage de laiton.
